Europäisches Patentamt

European Patent Office

Office européen des brevets

(11) Numéro de publication: **0 358 565**
**A2**

(12) **DEMANDE DE BREVET EUROPEEN**

(21) Numéro de dépôt: 89402415.7

(22) Date de dépôt: 05.09.89

(51) Int. Cl.⁵: **A 01 G 9/12**

(30) Priorité: 06.09.88 FR 8811625

(43) Date de publication de la demande:
14.03.90 Bulletin 90/11

(84) Etats contractants désignés:
**BE CH DE ES GB IT LI LU NL**

(71) Demandeur: **COMPAGNIE D'ETUDES ET PLASTIQUES CEP**
**21, rue de l'Industrie B.P. No 56**
**F-63307 Thiers (FR)**

(72) Inventeur: **Dambricourt Cornil, Géry, Bernard M.**
**2 rue du Gour**
**Marsat F-63200 Riom (FR)**

(74) Mandataire: **Madeuf, René Louis et al**
**Cabinet Madeuf Conseils en Propriété Industrielle 3,**
**Avenue Bugeaud**
**F-75116 Paris (FR)**

(54) **Dispositif de tuteurage pour végétaux.**

㊼ Dispositif de tuteurage pour végétaux, caractérisé en ce qu'il comporte un élément (1) sensiblement annulaire formant collier, des organes de liaison (2) et des tuteurs ou piquets (3) reliés audit élément (1) par les organes de liaison (2).

FIG. 1

EP 0 358 565 A2

Bundesdruckerei Berlin

## Description

### Dispositif de tuteurage pour végétaux

La présente invention concerne un nouveau dispositif de tuteurage pour végétaux.

La technique antérieure a fait connaître des dispositifs de tuteurage comportant une pièce en forme de disque ajouré par les lumières duquel les tiges des végétaux peuvent passer pour être retenues à l'intérieur du disque qui est lui-même maintenu au-dessus du sol par un piquet traversant une sorte de moyeu ou noyau formé à la partie centrale du disque.

Ces dispositifs connus sont peu pratiques à utiliser. En effet, il est souvent malaisé de passer les extrémités des tiges dans les lumières du disque, étant donné la fragilité desdites extrémités qui comportent souvent des fleurs ou des bourgeons. Le disque de tuteurage est ensuite encore plus difficile à ôter et doit le plus souvent être sacrifié en le sectionnant.

Un autre inconvénient réside dans le fait que le tuteur central traverse la masse de racines et ne confère pas une bonne stabilité au disque de maintien.

La présente invention crée un nouveau dispositif dont la mise en place est extrêmement simple de même que le retrait et, en outre, le dispositif de l'invention peut simuler un panier entourant le végétal et il peut aussi constituer un organe d'étaiement extrêmement stable susceptible de protéger le végétal qu'il contient des effets des intempéries, notamment du vent.

Conformément à l'invention, le dispositif de tuteurage pour végétaux est caractérisé en ce qu'il comporte un élément sensiblement annulaire formant collier, des organes de liaison et des tuteurs ou piquets reliés audit élément par les organes de liaison.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés.

La fig. 1 est une perspective du dispositif de tuteurage de l'invention en position d'utilisation.

La fig. 2 est une vue en plan, à plus grande échelle, d'un mode de réalisation du dispositif de l'invention.

La fig. 3 est une élévation très agrandie d'un détail de réalisation apparaissant en A à la fig. 2.

La fig. 4 est une vue en plan analogue à la fig. 4 illustrant un développement de l'invention.

La fig. 5 est une vue en plan agrandie d'un détail de réalisation d'une variante de la fig. 4.

La fig. 6 est une élévation correspondant à la fig. 5 mais tournée de 90°.

La fig. 7 est un plan analogue à la fig. 2 d'une variante.

La fig. 8 est une coupe, à plus grande échelle, vue suivant la ligne VIII-VIII de la fig. 7.

Le dispositif de tuteurage illustré au dessin comporte un élément 1 annulaire ou sensiblement annulaire qui est muni, de place en place, d'organes de liaison 2 destinés à la mise en place et au verrouillage de piquets ou tuteurs 3 dont la réalisation peut être absolument quelconque.

Des tuteurs appropriés sont bien connus dans la technique et sont constitués soit par des tiges en bois, par exemple en bambou, soit par des tiges extrudées ou autrement formées en matière synthétique, ces tiges présentant souvent une surface périphérique rugueuse pour faciliter la pose de liens.

Les tuteurs utilisés dans le dispositif de l'invention peuvent aussi être lisses sans que cela nuise aux qualités du dispositif qui en fait l'objet.

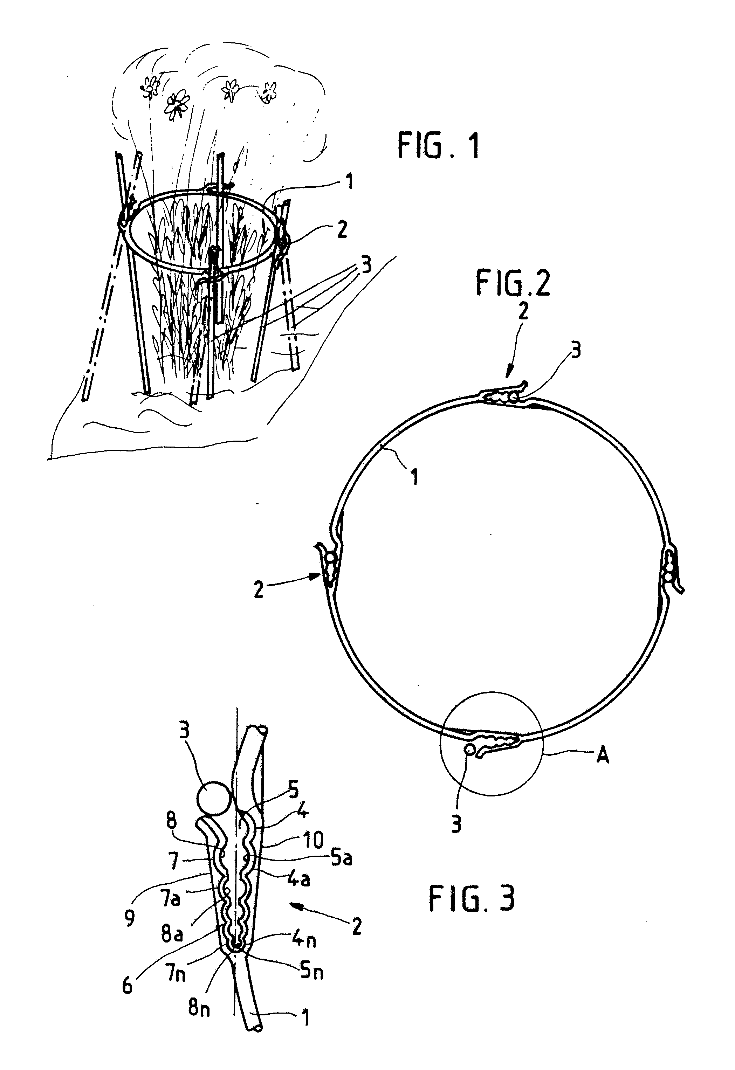

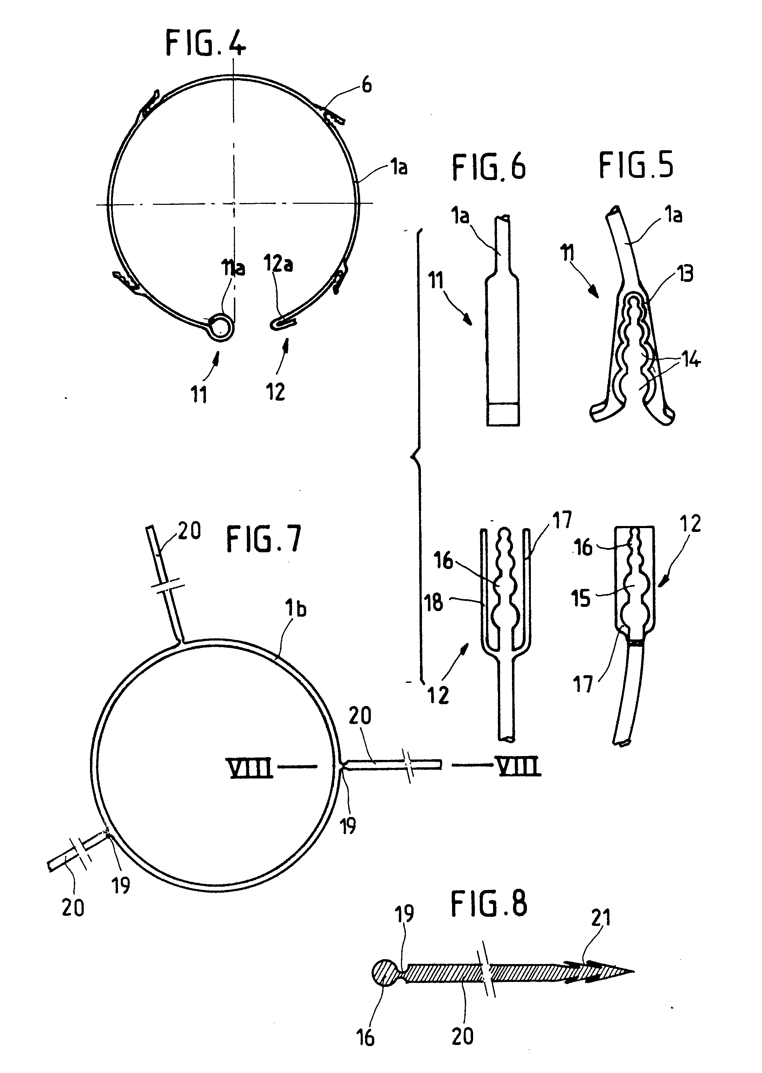

Les fig. 2 et 3 montrent des modes de réalisation avantageux des organes de liaison 2 dont est muni l'élément 1.

L'élément 1 est réalisé avantageusement en matière plastique et présente, en section, la forme d'un cordon ou d'un ruban.

Les organes de liaison formés de place en place comprennent, de préférence à partir de la périphérie externe des éléments 1, des portées d'appui 4, 4a... 4n délimitant des encoches 5, 5a...5n.

Les encoches 5, 5a...5n sont avantageusement réalisées pour présenter une configuration arquée dont le rayon de courbure va en décroissant depuis l'encoche 5 jusqu'à l'encoche 5n.

Les organes de liaison comportent aussi une languette 6 faisant face aux organes de liaison ci-dessus et divergeant à partir des éléments 1 auxquels elle est raccordée pour constituer une pince.

Dans la pratique, la languette 6 est réalisée de façon monobloc avec l'élément 1 lorsque celui-ci est fabriqué par moulage d'une matière synthétique.

Comme l'illustre la fig. 3, la languette présente des portées d'appui 7, 7a ...7n correspondant aux portées 4, 4a...4n et des encoches 8, 8a...8n de forme analogue aux encoches 5, 5a... 5n décrites ci-dessus.

Les organes de liaison 2 décrits ci-dessus sont destinés à recevoir chacun un tuteur 3 qui est inséré à force dans les encoches en regard et correspondant à sa dimension en section notamment à son diamètre.

Etant donné que la dimension des encoches est progressivement décroissante, il est possible d'utiliser des tuteurs de forme et dimension également différentes en section, ce qui est encore facilité par la possibilité de déformer élastiquement la languette 6.

Pour conférer de la raideur à la languette 6, de même qu'à la partie des éléments 1 formant les portées d'appui, il est avantageux que la languette comporte une nervure de renforcement 9 et l'élément 1 une nervure de renforcement 10.

La fig. 1 montre que les tuteurs 3 peuvent être disposés de façon oblique de sorte que le dispositif de tuteurage qu'ils constituent avec l'élément 1 forme une corbeille.

La possibilité d'incliner les tuteurs permet également de les disposer comme illustré en traits mixtes à la fig. 1 afin que le dispositif de tuteurage constitue alors un ensemble d'étaiement permettant d'assurer la stabilité d'une plante malgré les forces auxquelles elle peut être soumise du fait des intempéries.

Aux fig. 1 et 2, le dispositif de tuteurage comporte quatre organes de liaison et, par conséquent, quatre tuteurs. Ce nombre n'est qu'indicatif. En effet, les organes de liaison peuvent être en plus petit nombre, par exemple trois, ou en plus grand nombre.

La fig. 4 illustre un développement de l'invention selon lequel l'élément, approximativement annulaire et formant un collier, désigné alors par 1a, est constitué sous la forme d'un cordon ou d'un ruban arqué mais discontinu c'est-à-dire qu'il présente des extrémités 11 et 12.

Les extrémités 11 et 12 sont munies d'organes d'accrochage mutuel 11a, 12a.

La disposition ci-dessus permet de faciliter la mise en place du dispositif, étant donné que l'élément 1a, qui est flexible, peut être largement ouvert puis refermé pour entourer un végétal ou une touffe de végétaux telle que celle illustrée à la fig. 1. Les organes d'accrochage sont ensuite associés.

Les tuteurs, non représentés à la fig. 4, sont mis en place de la même façon que décrite dans ce qui précède.

Les organes d'accrochage de la fig. 4 permettent également, si on le désire, de régler le diamètre des éléments 1.

Les fig. 5 et 6 illustrent une autre réalisation des organes d'accrochage qui comportent aux extrémités 11 et 12 de l'élément 1 un embout femelle 13 délimitant intérieurement des encoches 14 analogues aux encoches 5 ou 8 décrites dans ce qui précède. Par ailleurs, l'extrémité 12 délimite un embout mâle 15 présentant des bossages 16 de forme complémentaire aux encoches 14. Pour éviter que les embouts mâle et femelle décrits ci-dessus puissent échapper lorsqu'ils sont engagés l'un dans l'autre, il est avantageux que l'un des embouts, par exemple l'embout mâle, soit muni, de part et d'autre des bossages 16, de plaquettes 17, 18 bien visibles à la fig. 6 qui prennent appui de part et d'autre de l'embout femelle 13.

D'autres organes d'accrochage peuvent évidemment être réalisés si on le désire sans sortir du cadre de l'invention.

Les fig. 7 et 8 illustrent une autre variante.

Dans cette réalisation, l'élément 1b, qui peut être fermé comme à la fig. 2 ou ouvert comme à la fig. 4, présente à sa périphérie externe des charnières 19 constituées par une partie amincie au-delà de laquelle s'étendent des piquets 20 destinés à constituer les tuteurs.

Le dispositif de tuteurage selon les fig. 7 et 8 est avantageusement réalisé par moulage par injection pour constituer un ensemble plat, les piquets 20 étant repliés au moment de l'utilisation.

L'invention n'est pas limitée aux exemples de réalisation représentés et décrits en détail, car diverses modifications peuvent y être apportées sans sortir de son cadre.

## Revendications

1 - Dispositif de tuteurage pour végétaux, caractérisé en ce qu'il comporte un élément (1) sensiblement annulaire formant collier, des organes de liaison (2) et des tuteurs ou piquets (3) reliés audit élément (1) par les organes de liaison (2).

2 - Dispositif suivant la revendication 1, caractérisé en ce qu'il comporte au moins trois organes de liaison (2) sensiblement équidistants.

3 - Dispositif suivant l'une des revendications 1 et 2, caractérisé en ce que les organes de liaison sont délimités entre des portées d'appui (4, 4a ...4n), des éléments (1a) et des portées d'appui (7, 7a...7n) formées en correspondance par des languettes (6) pour constituer des pinces.

4 - Dispositif suivant l'une des revendications 1 à 3, caractérisé en ce que les portées d'appui (4, 4a...4n) de l'élément (1) et les portées d'appui (7, 7a...7n) des languettes (6) délimitent des encoches (5, 5a...5n respectivement 8, 8a...8n) en arc de cercle de rayon progressivement décroissant.

5 - Dispositif suivant l'une des revendications 1 à 4, caractérisé par des nervures de renforcement (9, 10) associées aux portées d'appui de l'élément (1) et des languettes (6).

6 - Dispositif suivant l'une des revendications 1 à 5, caractérisé en ce que l'élément (1) est constitué par un collier fermé.

7 - Dispositif suivant l'une des revendications 1 à 6, caractérisé en ce que l'élément (1) est ouvert et présente des organes d'accrochage mutuel (11a, 12a).

8 - Dispositif suivant l'une des revendications 1 à 7, caractérisé en ce que les extrémités (11, 12) de l'élément (1a) ouvert comporte des embouts mâle et femelle (16, 13).

9 - Dispositif suivant l'une des revendications 1 à 8, caractérisé en ce que l'élément sensiblement annulaire (1b) forme des charnières (19) assurant sa liaison avec des piquets (20) constituant les tuteurs.

EP 0 358 565 A2

FIG . 1

FIG.2

FIG. 3

EP 0 358 565 A2

FIG.4

FIG.6

FIG.5

FIG.7

FIG.8